# EUROPÄISCHE PATENTSCHRIFT

(11) **EP 3 062 980 B1**
(45) Veröffentlichungstag und Bekanntmachung des Hinweises auf die Patenterteilung: **09.01.2019**
(21) Anmeldenummer: 14799119.4
(22) Anmeldetag: 29.10.2014
(51) Int. Cl.: B29C 33/62, B29C 37/00, C10M 111/04, C10M 173/02

(54) **TRENNMITTEL, INSBESONDERE ENTFORMUNGSHILFSMITTEL, VERFAHREN ZUR HERSTELLUNG DES TRENNMITTELS UND VERWENDUNG DES TRENNMITTELS**
PARTING AGENT, IN PARTICULAR RELEASE AGENT, METHOD FOR PRODUCING THE PARTING AGENT, AND USE OF THE PARTING AGENT
AGENT DE SÉPARATION, EN PARTICULIER AGENT D'AIDE AU DÉMOULAGE, PROCÉDÉ DE PRODUCTION DE L'AGENT DE SÉPARATION ET UTILISATION DE L'AGENT DE SÉPARATION

(30) Priorität: 31.10.2013 DE 102013018575
(43) Veröffentlichungstag der Anmeldung: 07.09.2016
(73) Patentinhaber: Münch Chemie International GmbH, 69469 Weinheim (DE); Emery Oleochemicals GmbH, 40589 Düsseldorf (DE)
(72) Erfinder: DROSSMANN, Sebastian, 69502 Hemsbach (DE); DAUTE, Peter, 27616 Beverstedt (DE); SCHÄFER, Martin, 27616 Beverstedt (DE)
(74) Vertreter: Kruspig, Volkmar
(86) Internationale Anmeldenummer: PCT/EP2014/073207
(87) Internationale Veröffentlichungsnummer: WO 2015/063145

(56) Entgegenhaltungen:
- WO-A1-2006/018178
- WO-A2-2009/037210
- M. IONESCU ET AL: "High Functionality Polyether Polyols Based on Polyglycerol", JOURNAL OF CELLULAR PLASTICS, Bd. 46, Nr. 3, 2. März 2010 (2010-03-02), Seiten 223-237, XP055163600, ISSN: 0021-955X, DOI: 10.1177/0021955X09355887

## Beschreibung

Die Erfindung betrifft ein Trennmittel nach dem Oberbegriff des Patentanspruchs 1 sowie ein Verfahren zum Herstellen eines solchen Trennmittels nach dem Oberbegriff des Patentanspruchs 8 und die Verwendung eines solchen Trennmittels nach dem Oberbegriff von Patentanspruch 10.

Trennmittel werden in der kunststoffverarbeitenden Industrie verwendet und dienen dort als Entformungshilfsmittel bei einer Verarbeitung von Thermoplasten, um diese nach ihrer Formgebung aus den jeweiligen Formwerkzeugen zu entfernen.

Bislang bekannte Trennmittel, die als Entformungshilfsmittel geeignet sind, basieren auf unterschiedlichen Zusammensetzungen, wobei beispielsweise Silikone, Wachs-Dispersionen, Seifen, tertiäre Amine und Polyester als Basis zu nennen sind. So beschreibt beispielsweise die JP 1990 2-3 048 Trennmittel auf der Basis von Kaliumoleaten, die JP 1995 0 258 960 ein Trennmittel auf der Basis von Silikonen. Die JP 2007 0 243 983 beschreibt ferner ein Trennmittel auf der Basis von Polyglyzerinester und die JP 1982 0 014 203 ein solches auf der Basis tertiärer Alkylamine. Die JP 2003 0 102 663 beschreibt Trennmittel auf der Basis von Ethylenoxid-Propylenoxid-Blockpolymeren mit Molmassen im Bereich von 2000-4000. Des Weiteren sind in der WO 2006/018178 A1 thermoplastische Formmassen mit verbesserten Fließ- und Entformungseingenschaften sowie Entformungshilfsmittel auf der Basis von Polycarbonaten und Polyestern sowie in M. Ioneschu et al: "High functionality polyetherpolyols based on polyglycerol" aus Journal of Cellular Plastics, Bd. 46, Nr. 3, 2. März 2010, Seiten 223-237 die Tauglichkeit von Polyglyzerolen zur Herstellung von steifen Polyurethan-Schäumen beschrieben.

Die vorgenannten Trennmittel eignen sich bei der Verarbeitung von Kunststoffen, wobei diese jedoch nicht universell einsetzbar sind, da sich die genannten Trennmittel nicht für alle Kunststoffe gleichermaßen eignen, sondern je nach Trennmittel-Kunststoff-Kombination Unverträglichkeiten zeigen und sich darüber hinaus auch als generell nachteilig bzw. schädigend für manche Kunststoffe erwiesen haben. Ein weiterer Nachteil dieser vorgenannten Trennmittelsysteme besteht ferner darin, dass diese zum Teil an den Formwerkzeugen Korrosion verursachen, kaum wasserlöslich und damit schlecht entfernbar bzw. abwaschbar sind und darüber hinaus eine schlechte bis keine biologische Abbaubarkeit zeigen. Ferner weisen bisher bekannte Trennmittel häufig Feststoffe, wie beispielsweise Puder, insbesondere Maispuder, Ruß, Talkum, Mehl, insbesondere Weizenmehl, Reispulver, Kunststoff- und Mineralienpartikel, beispielsweise in Kugelform und/oder Glaskörper auf, die zahlreiche Nachteile mit sich bringen, wie beispielsweise eine erhöhte Abrasion an den Maschinen, aber auch an den hergestellten Kunststoffprodukten. Des Weiteren können diese festen Bestandteile auch zu schwer zu reinigenden Verschmutzungen der verwendeten Maschinen sowie der hergestellten Kunststoffprodukte führen. Derartige Trennmittel sind beispielsweise aus der DE 196 19 838, der DE 25 56 422 oder der JP 2011 156 840 bekannt. Weitere herkömmliche Trennmittel weisen ferner ölige und/oder, insbesondere bei Raumtemperatur (25°C), flüchtige Kohlenwasserstoffe auf, deren Umweltverträglichkeit und Entsorgbarkeit problematisch ist, wobei ferner im Hinblick auf ölige und hydrophobe Bestandteile solcher Trennmittel, wie sie beispielsweise aus der DE 195 29 907 bekannt sind, die Gefahr einer Entmischung und damit verminderten Trennleistung besteht. Selbiges gilt auch für Trennmittel, wie sie beispielsweiseaus der DE 10 2008 006 614 bekannt sind, die flüchtige Substanzen aufweisen, die ausgasen und auf diese Weise entweichen, können.

Der Erfindung liegt demgemäß die Aufgabe zugrunde, die vorgenannten Nachteile zu beseitigen und ein Trennmittel zur Verfügung zu stellen, das eine hervorragende Trennwirkung gegenüber Kunststoffen aufweist, kostengünstig herstellbar ist und darüber hinaus vollständig bis nahezu vollständig biologisch abbaubar ist. Des Weiteren soll das Trennmittel nicht toxisch für Mensch und Umwelt sowie hautverträglich sein, eine gleichbleibend gute Trennleistung haben, frei von abrasiven Substanzen sein und eine einfache Reinigung der eingesetzten Maschinen als auch, sofern überhaupt notwendig, der hergestellten Produkte ermöglichen.

Diese Aufgabe wird durch ein Trennmittel nach Patentanspruch 1 sowie durch ein Verfahren zum Herstellen eines solchen Trennmittels gemäß Patentanspruch 8 und die Verwendung eines solchen Trennmittels gemäß Patentanspruch 10 gelöst.

Insbesondere wird die Aufgabe durch ein Trennmittel, insbesondere Entformungshilfsmittel, vorzugsweise zur Verwendung bei der Verarbeitung von Kunststoffen, insbesondere Thermoplasten, gelöst, wobei das Trennmittel als Komponente (A) ein oder mehrere Polyol(e) mit mehr als 4 Hydroxylgruppen sowie gegebenenfalls als Komponente (B) ein oder mehrere Additiv(e) aufweist, wobei das Trennmittel bei Raumtemperatur (25°C) eine vollständig homogene wasserlösliche Flüssigkeit, oder, bei Anwesenheit der Komponente (A) und der Komponente (B) eine vollständig homogene wasserlösliche flüssige Lösung, ist.

Ein wichtiger Punkt der Erfindung liegt darin, dass das erfindungsgemäße Trennmittel entweder nur aus einer Komponente (A) oder alternativ aus einer Mischung einer Komponente (A) und einer Komponente (B) besteht.

Ein weiterer erfindungswesentlicher Gedanke liegt darin, dass das erfindungsgemäße Trennmittel ausschließlich wasserlösliche Substanzen aufweist, die bei Raumtemperatur, d.h. bei einer Temperatur von etwa 25°C, nicht flüchtig sind.

Ferner liegt ein wesentlicher Gedanke der Erfindung darin, dass das erfindungsgemäße Trennmittel keine Stoffe aufweist, die in der Trennmittelmischung in einem Anwendungstemperaturbereich von 2°C bis 300°C, bevorzugt in einem Temperaturbereich von 15°C bis 280°C, und besonders bevorzugt in einem Temperaturbereich von 20°C bis 250°C, eine feste Zustandsform aufweisen.

Die Komponente (A) ist ein Polyol oder eine Mischung mehrerer Polyole, wobei die Polyole jeweils mehr als 4 Hydroxylgruppen aufweisen und damit gut wasserlöslich und insbesondere auch biologisch abbaubar sind. Das jeweilige Polyol ist ein bei Raumtemperatur nicht-flüchtiger hydroxylgruppenhaltiger Kohlenwasserstoff, wobei unter dem Begriff "nicht-flüchtig" im Rahmen dieser Erfindung eine Verdampfungsrate zu verstehen ist, die bei Raumtemperatur (25°C) und identischen Druckverhältnissen mit derjenigen von destilliertem Wasser mit einer Abweichung von 5% bis 15% vergleichbar ist.

Das erfindungsgemäße Trennmittel besteht aus einer Mischung einer Komponente (A) und einer Komponente (B), wobei die Komponente (A) wiederum ein oder mehrere Polyol(e) umfasst und Komponente (B) ein oder mehrere Additiv(e) repräsentiert.

Das Polyol ist erfindungsgemäß ausgewählt aus der Gruppe, die Folgendes umfasst: Sorbit, Glucose, Alkylpolyglycoside (APGs), Dextrine, bevorzugt Polyglycerine, Ethoxylate und/oder Propoxylate von Stärke sowie Fettalkoholether und Kohlenhydrate mit mehr als 4 Hydroxylgruppen und/oder Polymeren aus diesen Kohlenhydraten. Des Weiteren sei darauf hingewiesen, dass die Komponente (A) auch aus einer Mischung der vorgenannten Substanzen bestehen kann, jedoch immer mit der Maßgabe, dass eine jeweilige der genannten Substanzen mehr als 4 Hydroxylgruppen aufweist.

Des Weiteren weist das erfindungsgemäße Trennmittel, wie vorerwähnt, neben der Komponente (A) auch eine Komponente (B) auf, die ein Additiv ist, das ausgewählt ist aus der Gruppe, die Folgendes umfasst: Wasser, Alkohol(e), insbesondere Monoalkohole, Diole und Triole, wie beispielsweise Polyethylenglykol (PEG) oder Polypropylenglykol (PPG) sowie weitere oberflächenaktive Substanzen.

Das erfindungsgemäße Trennmittel liegt in dem Anwendungstemperaturbereich als vollständig homogene flüssige, insbesondere durchscheinende, feststofffreie Lösung vor, und grenzt sich somit von bisher bekannten herkömmlichen Trennmittelsuspensionen und/oder Trennmittelemulsionen ab. Das erfindungsgemäße Trennmittel hat eine hervorragende, insbesondere gleichbleibende, Trennwirkung, eine verbesserte Lagerbarkeit und lässt sich gut reinigen.

Durch die Verwendung der vorgenannten Polyole und Additive ist es möglich, ein Trennmittel bereitzustellen, das eine Viskosität im Bereich von 2500 bis 5000 mPas bei 20°C hat. Eine Viskosität für ein Trennmittel in diesem Viskositätsbereich hat sich als äußerst vorteilhaft hinsichtlich der Trennwirkung einerseits als auch hinsichtlich der Benetzbarkeit der jeweiligen Formwerkzeuge und Kunststoffe andererseits erwiesen.

Da darüber hinaus alle verwendeten Komponenten, d. h. sowohl die Polyole als auch die genannten Additive polare Substanzen sind, können diese nach einer Entformung problemlos von dem hergestellten Kunststoffgegenstand entfernt, beispielsweise abgewaschen werden. In gleicher Weise ist auch das Formwerkzeug leicht zu reinigen.

Ferner sind die vorgenannten Substanzen aus natürlichen nachwachsenden Rohstoffen herstellbar und aufgrund ihrer guten biologischen Abbaubarkeit problemlos entsorgbar. Aufgrund der guten biologischen Abbaubarkeit kann das erfindungsgemäße Trennmittel beispielsweise nach seiner Verwendung direkt dem Abwasser zugeführt werden, da die genannten Polyole und Additive aufgrund ihrer biologischen Herkunft besonders umweltverträglich sind. Eine aufwendige Isolierung der Trennmittel und eine aufwendige Entsorgung derselben nach ihrer Verwendung, wie bei bislang aus dem Stand der Technik bekannten Trennmitteln, entfällt somit bei dem erfindungsgemäßen Trennmittel, was zu einer deutlich kostengünstigeren Verwendung des erfindungsgemäßen Trennmittels beiträgt, da aufwendige Sicherheits- und Entsorgungsmaßnahmen, die beispielsweise bei nicht biologisch abbaubaren und/oder unter Umwelt- und Gesundheitsaspekten problematischen Substanzen notwendig sind, unterbleiben können.

Ein weiterer Vorteil des erfindungsgemäßen Trennmittels ist ferner die universelle Einsetzbarkeit für praktisch alle Kunststoffe, da durch den polaren Charakter der Trennmittelformulierung der jeweilige Kunststoff nicht angegriffen wird. Hinsichtlich der universellen Einsetzbarkeit erweist sich ferner der vorgenannte Viskositätsbereich des erfindungsgemäßen Trennmittels als besonders vorteilhaft, da das Trennmittel als Entformungshilfsmittel beispielsweise durch Sprühen, Pinseln, Wischen, Tauchen oder Gießen appliziert werden kann, was den Einsatzbereich des erfindungsgemäßen Trennmittels universell möglich macht.

Des Weiteren zeigt das erfindungsgemäße Trennmittel nicht nur gegenüber den zu formenden Kunststoffen eine sehr gute Verträglichkeit, sondern auch gegenüber den verwendeten metallischen und/oder keramischen Werkzeugformen, deren Oberfläche beispielsweise aus Stahl, Edelstahl, Aluminium, Chrom oder Nickel, um nur einige Metalle zu benennen, besteht. Dies erweist sich als weiterer Vorteil des neuartigen erfindungsgemäßen Trennmittels, da eine Korrosion der Werkzeugformen, wie beim Einsatz bisher bekannter Trennmittel, beim Einsatz des erfindungsgemäßen Trennmittels nicht zu befürchten ist.

Somit können mit dem erfindungsgemäßen Trennmittel praktisch alle Kunststoffe, jedoch insbesondere Thermoplaste, verarbeitet werden, wobei im Besonderen Elastomere, wie Ethylen-Propylen-Dien-Kautschuk (EPDM), hydrierter Acrylnitrilbutadien-Kautschuk (HNBR), Acrylatkautschuk (ACM), Ethylen-Acrylat-Kautschuk (AEM), Epichlorhydin-Kautschuk (ECO), Isopren-Kautschuk (NR), Latex, StyrolButadien-Kautschuk (SBR) und Isopren genannt sein.

Das Trennmittel ist hierbei für Kunststoffverarbeitungsverfahren, wie beispielsweise Spritzgießen, Pressen, Extrudieren, Autoklavieren und für Gießverfahren einsetzbar.

Hinsichtlich des Mischungsverhältnisses der Komponenten (A) und (B) sei darauf hingewiesen, dass die Komponente (A), also die Polyol-Komponente in Mischung mit der Komponente (B) verwendet wird.

Sofern, wie erfindungsgemäß ebenfalls vorgesehen, das Trennmittel aus einer Mischung der Komponenten (A) und (B) besteht, liegen diese in einem Mischungsverhältnis gemäß nachfolgender Tabelle vor,

| | Komponente (A) | Komponente (B) |
|---|---|---|
| | 2 - 5 | 98 - 95 |
| oder | 7,5 - 45 | 92,5 - 55 |
| oder | 15 - 92 | 85 - 8 |

wobei die jeweiligen Angaben Gewichtsprozentangaben sind und sich die Summe der Komponenten (A) und (B) in der Mischung jeweils auf 100 Gew.-% ergänzt. Somit besteht das erfindungsgemäße Trennmittel aus einer Mischung der Komponenten (A) und (B).

Insbesondere kann die Komponente (A) im Rahmen der Erfindung mit einem minimalen Gewichtsanteil von 2 Gew.-% vorliegen, das erfindungsgemäß in 0,1 bis 0,5 Gew.-%-Schritten bis zu einem maximalen Gewichtsanteil der Komponente (A) von 99 Gew.-% erhöht werden kann, wobei der Gewichtsanteil der Komponente (B) jeweils so angepasst wird, dass sich die Summe der Komponenten (A) und (B) in der Mischung jeweils auf 100 Gew.-% ergänzt. Diesbezügliche Ausführungsformen sind beispielhaft in nachfolgender Tabelle angegeben:

| Komponente (A) | Komponente (B) |
|---|---|
| 2 - 5 | 98 - 95 |
| | |
| | |
| 7,5 - 45 | 92,5 - 55 |
| | |
| | |
| 15 - 92 | 85 - 8 |

Des Weiteren sei darauf hingewiesen, dass sämtliche in dem Trennmittel eingesetzten Substanzen eine biologische Abbaubarkeit von mindestens 65%, bevorzugt 80%, und besonders bevorzugt 99%, hinsichtlich ihres DOC-Eliminationsgrads nach DIN EN 1484-H3 in 28 Tagen aufweisen. An dieser Stelle sind im Rahmen der Erfindung auch DOC-Eliminationsgrade nach DIN EN 1484-H3 in 28 Tagen im Bereich von 75 % bis 85 %, insbesondere im Bereich von 75 % bis 98 % vorstellbar. Es wird jedoch ausdrücklich darauf hingewiesen, dass DOC-Eliminationsgrade nach DIN EN 1484-H3 in 28 Tagen von > 65 % bis 99 %, gegebenenfalls bis 99,9 %, eindeutig bevorzugt sind und durch die erfindungsgemäße Zusammensammensetzung des Trennmittels erreicht werden.

Somit sind die in dem Trennmittel eingesetzten Substanzen in sehr kurzer Zeit zu einem sehr hohen Grad biologisch abbaubar, was zu einer sehr guten biologischen Abbaubarkeit und damit Umweltverträglichkeit des erfindungsgemäßen Trennmittels führt. Im Übrigen basiert das erfindungsgemäße Trennmittel, insbesondere zumindest teilweise, nach Wunsch auch ausschließlich, auf nachwachsenden, biologisch abbaubaren Rohstoffen. Im Übrigen ist das erfindungsgemäße Trennmittel nicht nur sehr schonend gegenüber den zu verarbeitenden Kunststoffen und daraus gefertigten Produkten, sondern auch sehr hautverträglich, was eine Handhabung des erfindungsgemäße Trennmittels gegenüber bisherigen Trennmitteln deutlich vereinfacht, wobei auf Schutzvorkehrungen, wie sie bei, oft insbesondere toxischen, Trennmitteln gemäß dem Stand der Technik, in der Regel nötig waren, weitgehend bis ganz verzichtet werden kann.

Des Weiteren wird die erfindungsgemäße Aufgabe auch durch ein Verfahren gemäß Patentanspruch 9 gelöst. Insbesondere wird die Aufgabe hierbei durch ein Verfahren zur Herstellung eines Trennmittels, insbesondere Entformungshilfsmittels, vorzugsweise zur Verwendung bei der Verarbeitung von Kunststoffen, insbesondere Thermoplasten, gelöst, dass der vorstehenden Spezifikation entspricht, wobei eine Trennmittelkomponente (A), nämlich ein oder mehrere Polyol(e) mit mehr als 4 Hydroxylgruppen, gegebenenfalls mit einer Trennmittelkomponente (B), nämlich einem oder mehreren Additiv(en), vollständig gemischt wird. Eine vollständige Durchmischung dieser beiden Substanzen gewährleistet das Vorliegen eines homogenen Gemischs des erfindungsgemäßen Trennmittels, das universell und ohne weitere Vorbereitungsschritte außer einem eventuellen Aufrühren oder Schütteln, verwendet werden kann.

Darüber hinaus wird das Mischen erfindungsgemäß bei Raumtemperatur, insbesondere ohne Zusatzheizung, durchgeführt, wobei die Komponenten (A) und (B) physikalisch unter Herstellung eines homogenen Gemischs miteinander vermengt werden. Aufgrund der Tatsache, dass das Mischen der beiden Komponenten des erfindungsgemäßen Trennmittels bei Raumtemperatur erfolgen kann, ist eine Zusatzheizung in vorteilhafter Weise nicht notwendig, was zu einer Energieeinsparung im Zuge der Herstellung des Trennmittels beiträgt.

Des Weiteren wird die erfindungsgemäße Aufgabe auch durch die Verwendung eines Trennmittels gemäß vorstehenden Ausführungen gelöst, wobei das Trennmittel erfindungsgemäß zum Entformen von Gegenständen, insbesondere in der Kunststoffverarbeitung verwendet wird, wobei hier insbesondere Spritzgießen, Pressen, Extrudieren, Autoklavieren und Gießen erwähnt seien. Das Trennmittel wird hierbei vorzugsweise durch Sprühen, Pinseln, Wischen, Tauchen und/oder Gießen auf die Werkzeugform und/oder gegebenenfalls den Kunststoffrohling aufgebracht.

Weitere Ausführungsformen der Erfindung ergeben sich aus den Unteransprüchen.

Nachfolgend wird die Erfindung anhand von Ausführungsbeispielen näher beschrieben.

### Beispiel 1

In einem 200 Liter Metallfass wurden 120 kg Sorbit-Fettalkoholether mit 40 kg Polypropylenglykol-600 für 15 Minuten mit Hilfe einer Dissolverscheibe vollständig miteinander vermischt. Danach wurde eine Viskosität bei 20°C (Brookfield) von 2640 mPas sowie eine biologische Abbaubarkeit, gemäß DOC-Eliminationsgrad nach DIN EN 1484-H3 in 28 Tagen, von 75% gemessen. Die Entformungshilfe wurde auf einen Metallstab, mit einem Durchmesser von 30mm, aus Werkzeugstahl aufgetragen. Nachfolgend wurde ein Rohgummischlauch aus EPDM (Ethylen-Propylen-Dien-Kautschuk), mit einem Durchmesser von 31mm, händisch auf den Metallstab aufgezogen und bei 170°C für 20 Minuten im Autoklaven, mit überhitztem Wasserdampf, vulkanisiert. Nach der Vulkanisation wurde der EPDM-Schlauch im noch heißen Zustand mit Hilfe einer Federwaage, zur Messung der Zugkraft in Newton (Hersteller PESOLA®), vom Metallstab abgezogen.

Die hierbei erzielte Trennleistung mit der Entformungshilfe gemäß Beispiel 1 zeigte eine Zugkraft von 20 Newton (N).

### Beispiel 2

In einem 1000 Liter IBC-Behälter (Intermediate Bulk Container) wurden 450 kg Alkylpolyglycosid, auf Basis einer Glucose mit m = 5 und n = 15, gemäß nachstehender Formel 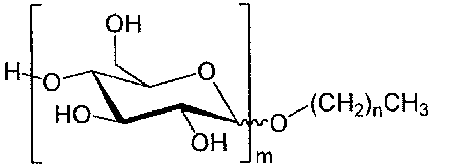 mit 500 kg Ethandiol für 15 Minuten mit Hilfe einer Dissolverscheibe vollständig miteinander vermischt. Danach wurde eine Viskosität bei 20°C (Brookfield) von 2120 mPas sowie eine biologische Abbaubarkeit, gemäß DOC-Eliminationsgrad nach DIN EN 1484-H3 in 28 Tagen, von 95% gemessen. Die Entformungshilfe wurde mit Hilfe einer Sprühpistole, mit einem Düsendurchmesser von 1,5 bis 2,0mm und einem Luftdruck von 2,0bar, auf eine Werkzeugform aus Aluminium zweimal appliziert. Danach wurde eine flüssige Latexmischung eingegossen und für 30 Minuten bei 160°C vulkanisiert. Nach der Vulkanisation wurde die entstandene Latexmatte nach dem Erkalten mit Hilfe einer Federwaage, zur Messung der Zugkraft in Newton (N) (Hersteller PESOLA®), aus der Werkzeugform aus Aluminium herausgezogen.

Die hierbei erzielte Trennleistung mit der Entformungshilfe gemäß Beispiel 2 zeigte eine Zugkraft von 15 Newton (N).

### Beispiel 3

In einem 1000 Liter IBC-Behälter (Intermediate Bulk Container) wurden 810 kg Polyglycerin mit 180 kg Glycerin für 15 Minuten mit Hilfe einer Dissolverscheibe vollständig miteinander vermischt. Danach wurde eine Viskosität bei 20°C (Brookfield) von 4320 mPas sowie eine biologische Abbaubarkeit, gemäß DOC-Eliminationsgrad nach DIN EN 1484-H3 in 28 Tagen, von 80% gemessen. Die Entformungshilfe wurde kontinuierlich auf einen Metallkern gegossen auf welchen kontinuierlich ein Schlauch aus HNBR (Hydrierter Acrylnitrilbutadien-Kautschuk) extrudiert wurde.

Die hierbei erzielte Trennleistung mit der Entformungshilfe gemäß Beispiel 3 zeigte, dass die Produktion eines Endlosschlauches aus HNBR ohne Probleme durchgeführt werden konnte. Es konnten keine Verschmutzungen oder Anbrenner festgestellt werden.

## Patentansprüche

1. Trennmittel, insbesondere Entformungshilfsmittel, vorzugsweise zur Verwendung bei der Verarbeitung von Kunststoffen, insbesondere Thermoplasten,
**dadurch gekennzeichnet, dass**
das Trennmittel als Komponente (A) ein oder mehrere Polyol(e) mit mehr als 4 Hydroxylgruppen sowie als Komponente (B) ein oder mehrere Additiv(e) aufweist, wobei das Trennmittel bei Raumtemperatur (25°C) eine vollständig homogene wasserlösliche Flüssigkeit ist und wobei die Komponenten (A) und (B) in folgendem Gewichtsprozentverhältnis enthalten sind,
| | Komponente (A) | Komponente (B) |
|---|---|---|
| | 2 - 5 | 98 - 95 |
| oder | 7,5 - 45 | 92,5 - 55 |
| oder | 15 - 92 | 85 - 8 |
wobei die Summe des Mischungsverhältnisses der Komponenten (A) und (B) immer 100 Gew.-% ist.

2. Trennmittel nach Anspruch 1,
**dadurch gekennzeichnet, dass**
das Polyol ausgewählt ist aus der Gruppe, die folgendes umfasst: Sorbit, Glucose, Alkylpolyglycoside (APGs), Dextrine, Polyglycerine, Fettalkoholether sowie Kohlenhydrate mit mehr als 4 Hydroxylgruppen und/oder Polymere daraus.

3. Trennmittel nach einem der vorhergehenden Ansprüche,
**dadurch gekennzeichnet, dass**
das Additiv ausgewählt ist aus der Gruppe, die folgendes umfasst: Wasser, Alkohol(e), insbesondere Monoalkohole, Diole oder Triole, wie beispielsweise Polyethylenglykol (PEG) oder Polypropylenglykol (PPG) oder andere oberflächenaktive Substanzen.

4. Trennmittel nach einem der vorhergehenden Ansprüche,
**dadurch gekennzeichnet, dass**
sämtliche in dem Trennmittel eingesetzten Substanzen eine biologische Abbaubarkeit gemäß nachfolgender Tabelle aufweisen:
| | DOC-Eliminationsgrad nach DIN EN 1484-H3 in 28 Tagen |
|---|---|
| | 65 % - 80 % |
| bevorzugt | 75 % - 85 % |
| besonders bevorzugt | 90 % - 99 % |

5. Trennmittel nach einem der vorhergehenden Ansprüche,
**dadurch gekennzeichnet, dass**
das Trennmittel, insbesondere zumindest teilweise, auf nachwachsenden, biologisch abbaubaren Rohstoffen, basiert.

6. Trennmittel nach einem der vorhergehenden Ansprüche,
**gekennzeichnet durch**
eine Viskosität im Bereich von 2500 - 5000 mPas bei 20°C.

7. Trennmittel nach einem der vorhergehenden Ansprüche,
**dadurch gekennzeichnet, dass**
das Trennmittel feststofffrei ist.

8. Verfahren zur Herstellung eines Trennmittels, insbesondere Entformungshilfsmittels, vorzugsweise zur Verwendung bei der Verarbeitung von Kunststoffen, insbesondere Thermoplasten, nach einem der vorhergehenden Ansprüche
**dadurch gekennzeichnet, dass**
eine Trennmittelkomponente (A), nämlich ein oder mehrere Polyol(e) mit mehr als 4 Hydroxylgruppen, mit einer Trennmittelkomponente (B), nämlich einem oder mehreren Additiv(en), vollständig zu einer bei Raumtemperatur (25°C) vollständig homogenen feststofffreien wasserlöslichen Flüssigkeit gemischt wird, wobei die Komponenten (A) und (B) in folgendem Gewichtsprozentverhältnis enthalten sind,
| | Komponente (A) | Komponente (B) |
|---|---|---|
| | 2 - 5 | 98 - 95 |
| oder | 7,5 - 45 | 92,5 - 55 |
| oder | 15 - 92 | 85 - 8 |
wobei die Summe des Mischungsverhältnisses der Komponenten (A) und (B) immer 100 Gew.-% ist..

9. Verfahren nach Anspruch 8,
**dadurch gekennzeichnet, dass**
das Mischen bei Raumtemperatur, insbesondere ohne Zusatzheizung, durchgeführt wird, wobei die Komponenten (A) und (B) physikalisch unter Herstellung eines homogenen Gemisches miteinander vermengt werden.

10. Verwendung eines Trennmittels nach einem der vorhergehenden Ansprüche 1 bis 7 und/oder hergestellt nach einem der vorhergehenden Ansprüche 8 bis 9 zur Entformung von Gegenständen, insbesondere in der Kunststoffverarbeitung, wie beispielsweise Spritzgiessen, Pressen, Extrudieren, Autoklavieren und Gießen, vorzugsweise durch eine Aufbringung des Trennmittels mittels Sprühen, Pinseln, Wischen, Tauchen und/oder Gießen.

## Claims

1. Parting agent, in particular release agent, preferably for use in the processing of plastics, in particular thermoplastics,
**characterized in that**
the parting agent comprises as component (A) one or more polyol(s) having more than 4 hydroxyl groups and as component (B) one or more additives, wherein the parting agent is a completely homogeneous water-soluble liquid at room temperature (25°C) and wherein the components (A) and (B) are contained in the following percentage by weight ratio,
| | Component (A) | Component (B) |
|---|---|---|
| | 2 - 5 | 98 - 95 |
| or | 7.5 - 45 | 92.5 - 55 |
| or | 15 - 92 | 85 - 8 |
wherein the sum of the mixing ratio of components (A) and (B) is always 100% by weight.

2. Parting agent according to claim 1, **characterized in that** the polyol is selected from the group comprising: sorbit, glucose, alkyl polyglycosides (APGs), dextrins, polyglycerins, fatty alcohol ethers and carbohydrates having more than 4 hydroxyl groups and/or polymers thereof.

3. Parting agent according to one of the preceding claims, **characterized in that** the additive is selected from the group comprising: water, alcohol(s), in particular monoalcohols, diols or triols such as poly ethylene glycol (PEG) or polypropylene glycol (PPG) or other surfactants.

4. Parting agent according to one of the preceding claims, **characterized in that** all substances used in the parting agent have a biodegradability according to the following table:
| | Degree of DOC elimination according to DIN EN 1484-H3 within 28 days |
|---|---|
| | 65 % - 80 % |
| preferably | 75 % - 85 % |
| more preferably | 90 % - 99 % |

5. Parting agent according to one of the preceding claims,
**characterized in that** the parting agent, in particular at least in part, is based on renewable, biodegradable raw materials.

6. Parting agent according to one of the preceding claims,
**characterized by** a viscosity in the range of 2500 - 5000 mPas at 20°C.

7. Parting agent according to one of the preceding claims,
**characterized in that** the parting agent is free of solids.

8. Method for producing a parting agent, in particular a release agent, preferably for use in the processing of plastics, in particular thermoplastics, according to one of the preceding claims,
**characterized in that**
a parting agent component (A), in particular one or more polyol(s) having more than 4 hydroxyl groups, is completely mixed with a parting agent component (B), in particular one or more additives, to a water-soluble liquid which is completely free of solids and completely homogenous at room temperature (25°C), wherein the components (A) and (B) are contained in the following percentage by weight ratio,
| | Component (A) | Component (B) |
|---|---|---|
| | 2 - 5 | 98 - 95 |
| or | 7.5 - 45 | 92.5 - 55 |
| or | 15 - 92 | 85 - 8 |
wherein the sum of the mixing ratio of components (A) and (B) is always 100% by weight.

9. Method according to claim 8,
**characterized in that**
the mixing is carried out at room temperature, in particular without additional heating, the components (A) and (B) being physically mixed with one another to form a homogeneous mixture.

10. Use of a parting agent according to one of the preceding claims 1 to 7 and/or produced according to one of the preceding claims 8 to 9 for releasing objects, in particular in plastics processing, such as injection molding, pressing, extruding, autoclaving and molding, preferably by applying the parting agent by spraying, brushing, wiping, dipping and/or molding.

## Revendications

1. Agent de séparation, en particulier agent d'aide au démoulage, de préférence pour l'utilisation lors de la transformation de matières plastiques, en particulier de matières thermoplastiques,
**caractérisé en ce que**
l'agent de séparation comprend en tant que composante (A) un ou plusieurs polyol(s) avec plus de 4 groupes hydroxyles, et en tant que composante (B) un ou plusieurs additif(s), l'agent de séparation étant, à température ambiante (25 °C), un liquide complètement homogène et soluble à l'eau, et les composantes (A) et (B) étant contenues dans le rapport de pourcentage pondéral suivant :
| | composante (A) | composante (B) |
|---|---|---|
| | 2 - 5 | 98 - 95 |
| ou | 7,5 - 45 | 92,5 - 55 |
| ou | 15 - 92 | 85 - 8 |
où la somme du rapport de mélange des composantes (A) et (B) est toujours de 100 % en poids.

2. Agent de séparation selon la revendication 1,
**caractérisé en ce que**
le polyol est choisi parmi le groupe comprenant sorbitol, glucose, alkylpolyglycosides (APGs), dextrines, polyglycérines, éthers d'alcool gras et hydrates de carbone à plus de 4 groupes hydroxyles et/ou leurs polymères.

3. Agent de séparation selon l'une des revendications précédentes,
**caractérisé en ce que**
l'additif est choisi parmi le groupe comprenant eau, alcool(s), en particulier monoalcools, diols ou triols, comme par exemple glycol de polyéthylène (PEG) ou glycol de polypropylène (PPG) ou autres substances tensioactives.

4. Agent de séparation selon l'une des revendications précédentes,
**caractérisé en ce que**
toutes les substances utilisées dans l'agent de séparation présentent une biodégradabilité selon le tableau suivant :
| | degré d'élimination DOC selon DIN EN 1484-H3 en 28 jours |
|---|---|
| | 65 % - 80 % |
| de préférence | 75 % - 85 % |
| de préférence particulière | 90 % - 99 % |

5. Agent de séparation selon l'une des revendications précédentes,
**caractérisé en ce que**
l'agent de séparation est basé, en particulier au moins partiellement, sur des matières brutes renouvelables biodégradables.

6. Agent de séparation selon l'une des revendications précédentes,
**caractérisé par**
une viscosité dans la plage de 2500 - 5000 mPas à 20 °C.

7. Agent de séparation selon l'une des revendications précédentes,
**caractérisé en ce que**
l'agent de séparation est dépourvu de solides.

8. Procédé de préparation d'un agent de séparation, en particulier d'un agent d'aide au démoulage, de préférence pour l'utilisation lors de la transformation de matières plastiques, en particuliers de matières thermoplastiques, selon l'une des revendications précédentes,
**caractérisé en ce que**
une composante (A) de l'agent de séparation, à savoir un ou plusieurs polyol(s) avec plus de 4 groupes hydroxyles, est mélangée avec une composante (B) de l'agent de séparation, à savoir un ou plusieurs additif(s), pour donner un liquide complètement homogène, soluble à l'eau et dépourvu de solides, à température ambiante (25 °C), les composantes (A) et (B) étant contenues dans le rapport de pourcentage pondéral suivant :
| | composante (A) | composante (B) |
|---|---|---|
| | 2 - 5 | 98 - 95 |
| ou | 7,5 - 45 | 92,5 - 55 |
| ou | 15 - 92 | 85 - 8 |
où la somme du rapport de mélange des composantes (A) et (B) est toujours de 100 % en poids.

9. Procédé selon la revendication 8,
**caractérisé en ce que**
le mélangeage s'effectue à température ambiante, en particulier sans chauffage supplémentaire, les composantes (A) et (B) étant mélangées physiquement l'une avec l'autre pour préparer un mélange homogène.

10. Utilisation d'un agent de séparation selon l'une des revendications 1 à 7 et/ou préparé selon l'une des revendications 8 à 9 pour démouler des objets, en particulier dans la transformation de matières plastiques, comme par exemple la coulée par injection, le pressage, l'extrusion, l'autoclavage et la coulée, de préférence par application de l'agent de séparation par pulvérisation, application au pinceau, essuyage, immersion et/ou coulée.
